Europäisches Patentamt

European Patent Office

Office européen des brevets

(19)

(11) Veröffentlichungsnummer: **0 242 372 B1**

(12) **EUROPÄISCHE PATENTSCHRIFT**

(45) Veröffentlichungstag der Patentschrift: **16.01.91**

(51) Int. Cl.⁵: **F 16 H 47/04**

(21) Anmeldenummer: **86905736.4**

(22) Anmeldetag: **08.10.86**

(86) Internationale Anmeldenummer:
**PCT/DE86/00405**

(87) Internationale Veröffentlichungsnummer:
**WO 87/02436 23.04.87 Gazette 87/09**

(54) **STUFENLOSES HYDROMECHANISCHES VERZWEIGUNGSGETRIEBE INSBESONDERE FÜR KRAFTFAHRZEUGE.**

(30) Priorität: **11.10.85 DE 3536335**

(43) Veröffentlichungstag der Anmeldung:
**28.10.87 Patentblatt 87/44**

(45) Bekanntmachung des Hinweises auf die Patenterteilung:
**16.01.91 Patentblatt 91/03**

(84) Benannte Vertragsstaaten:
**FR GB IT SE**

(56) Entgegenhaltungen:
**DE-A-2 854 375**
**DE-A-3 125 123**
**FR-A-2 412 761**
**GB-A-2 011 560**
**US-A-3 897 697**
**US-A-4 261 226**

(73) Patentinhaber: **Meyerle, Michael**
**Kiefernweg 9**
**D-7996 Meckenbeuren-Lochbrücke (DE)**

(72) Erfinder: **Meyerle, Michael**
**Kiefernweg 9**
**D-7996 Meckenbeuren-Lochbrücke (DE)**

(74) Vertreter: **Münich, Wilhelm, Dr. et al**
**Kanzlei Münich, Steinmann, Schiller**
**Willibaldstrasse 36/38**
**D-8000 München 21 (DE)**

Courier Press, Leamington Spa, England.

**Beschreibung**

Die Erfindung bezieht sich auf ein stufenloses hydrostatisch-mechanisches Verzweigungsgetriebe für Kraftfahrzeuge mit mindestens zwei Schaltbereichen, bei dem die stufenlose Regelung des Getriebes durch ein hydrostatisches Getriebe erfolgt.

Aus der DE-C 28 54 375 ist ein hydrostatisches Verzweigungsgetriebe mit zwei Schaltbereichen bekannt, das zwar einfach in seinem Aufbau ist, aber relativ große Hydrostateinheiten erfordert sowie auf einen bestimmten Anwendungsbereich begrenzt ist. Bei diesem bekannten Verzweigungsgetriebe liegt, wie auch bei anderen bekannten Systemen, die Drehzahl der Abtriebswelle relativ hoch, so daß in vielen Anwendungsfällen am Abtrieb des Getriebes eine zusätzliche Übersetzungsanpassungsstufe erforderlich ist.

Ein hydrostatisch-mechanisches Verzweigungsgetriebe der im Oberbegriff des Anspruchs 1 aufgeführten Art ist aus der US-A 4 261 226 bekannt. Dieses bekannte Verzweigungsgetriebe weist zwei Kupplungen für einen zweiten und einen dritten Fahrbereich auf. Bei dieser bekannten Getriebeausführung dient die eine der erwähnten Kupplungen der Verbindung zweier Getriebeglieder des Summierungsplanetengetriebes innerhalb eines Schaltbereichs und die andere der Verbindung der ersten, mit der Antriebswelle verbundenen Hydrostateinheit mit einem Glied des Summierungsplanetengetriebes in einem anderen Schaltbereich. Das bekannte Getriebe hat den Nachteil einer sehr begrenzten Variationsmöglichkeit besonders hinsichtlich einer Anpaßbarkeit der Bereichsgrößen an verschiedene fahrzeugspezifische Bedingungen. Bei einer Ausführungsform ist der dritte Fahrbereich sehr klein, wodurch die Hydrostateinheiten entsprechend größer dimensioniert werden müssen bzw. nur ein geringer Overdrive-Bereich möglich ist. Bei weiteren Ausführungen ist zwar ein größerer dritter Fahrbereich möglich, jedoch mit dem Nachteil eines großen technischen Aufwands des mechanischen Getriebeteils und Einschränkung der Modulbauweise. Bei Anwendung der Inline-Bauweise müssen die Bereichskupplungen voneinander getrennt werden. Weil das Drucköl durch mehrere Wellen geführt werden muß, ist die Ölversorgung der Kupplungen aller Ausführungen sehr kompliziert und aufwendig.

Der Erfindung liegt die Aufgabe zugrunde, ein hydromechanisches Verzweigungsgetriebe für Kraftfahrzeuge zu schaffen, das die spezifischen Anforderungen an den Hydrostaten senkt, den hydrostatischen Leistungsanteil reduziert und die geräusch-, wirkungsgrad- und lebensdauerbestimmenden Parameter, wie den Hydrostatdruck, die Hydrostatdrehzahl und die Größe dieser Komponenten sowie deren Anordnung in ein akzeptables, technisch machbares.

Maß bringt. Darüberhinaus soll eine weitgehende Anpassungsfähigkeit an verschiedene fahrzeugspezifische Bedingungen erfülbar sein. Die Drehzahl der Abtriebswelle soll so liegen, daß sich möglichst eine abtriebsseitige Übersetzungsanpassung durch zusätzliche Übersetzungsstufen erübrigt. Es soll eine kostengünstige und rationelle Fertigung erzielt werden. Des weiteren sollen eine montageund servicefreundliche Modulbauweise realisierbar und kompakte, fahrzeugfreundliche, kosten- und bauraumgünstige Konstruktionen möglich sein.

Die Aufgabe wird durch die im Anspruch 1 aufgeführten Merkmale gelöst.

Weitere vorteilhafte Ausgestaltungen der Erfindung gehen aus den Unteransprüchen und der nachfolgenden Beschreibung hervor.

Die Erfindung wird an Ausführungsbeispielen anhand von Zeichnungen erläutert. Es zeigen:

Fig. 1 ein erstes Ausführungsbeispiel mit drei Vorwärtsfahrbereichen,

Fig. 2 ein zweites Ausführungsbeispiel mit zwei Vorwärtsfahrbereichen,

Fig. 3 ein drittes Ausführungsbeispiel mit drei Vorwärtsfahrbereichen,

Fig. 4 ein viertes Ausführungsbeispiel mit drei Vorwärtsfahrbereichen,

Fig. 5 ein fünftes Ausführungsbeispiel mit drei Vorwärtsfahrbereichen für Querbauweise / Frontantrieb PKW,

Fig. 6 ein sechstes Ausführungsbeispiel mit drei Vorwärtsfahrbereichen für Schwerkraftfahrzeuge, z.B. Busse, Nutzkraftfahrzeuge u.a.,

Fig. 7 ein siebentes Ausführungsbeispiel mit drei Vorwärtsfahrbereichen für Schwerkraftfahrzeuge, z.B. Busse, Nutzkraftfahrzeuge u.a.

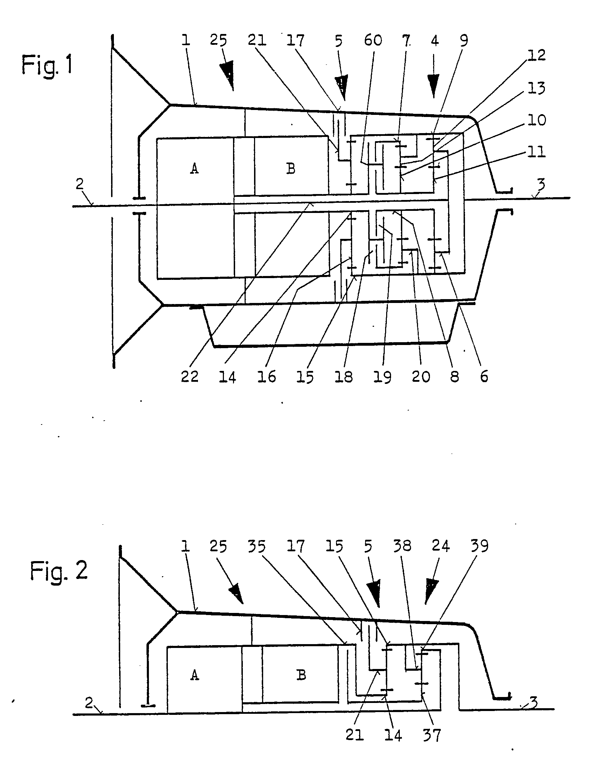

Durch die Kombination eines Summierungsplanetengetriebes 4; 26; 40 mit einem zweiten Planetengetriebe 5 (Fig. 1; 3 bis 7) nach der in Anspruch 1 dargestellten Weise wird erreicht, daß drei Fahrbereiche schaltbar sind, wobei der erste Fahrbereich rein hydrostatisch, der zweite und dritte Fahrbereich hydromechanisch arbeiten. Im ersten Fahrbereich wird bei geschlossener Kupplung bzw. Bremse 17 die Leistung über die zweite Hydrostateinheit B auf das Sonnenrad 14 und das Hohlrad 15 direkt auf die Abtriebswelle 3 übertragen. Im zweiten Fahrbereich wird bei geschlossener Kupplung 18 ein Teil der Leistung hydrostatisch über die zweite Hydrostateinheit B auf das Hohlrad 7 des Summierungsplanetengetriebes 4 und die mechanische Leistung über die Antriebswelle 2 die Zwischenwelle 22 auf den Steg 6 des Summierungsplanetengetriebes 4 auf die beiden Sonnenräder 11 und 10 des Summierungsplanetengetriebes 4 übertragen, wobei der hydraulische und mechanische Leistungszweig sich innerhalb des Summierungsplanetengetriebes aufsummieren und sowohl über den Steg 20 und das Hohlrad 9 des Summierungsplanetengetriebes 4 auf die Abtriebswelle 3 übertragen werden. Im dritten Fahrbereich wird bei geschlossener Kupplung 19 die mechanische Leistung ebenfalls über den Steg 6 des Summierungsplanetengetriebes geführt und die hydraulische Leistung über das Sonnenrad 11 auf das Hohlrad 9 des Summierungsplanetengetriebes aufsummiert und gemeinsam über die Abtriebswelle 3 abgeführt.

Am Ende des zweiten Schaltbereiches haben alle Glieder des Summierungsplanetengetriebes und des zweiten Planetengetriebes 5 sowie Antriebs- und Abtriebswelle Synchronlauf. Erst im dritten 3 Schaltbereich steigt die Drehzahl der Abtriebswelle über die Drehzahl der Antriebswelle 2 an. Bei Anwendung dieses Getriebesystems im PKW kann der dritte Schaltbereich zur Ausnutzung der Verbrauchsbestlinie des Motors voll für den Overdrivebereich genutzt werden. Durch den dritten Fahrbereich kann der Übersetzungsbereich gegenüber konventionellen Getrieben um das Doppelte und mehr erweitert werden, so daß das von der Motorseite her angebotene große Einsparungspotential voll ausgeschöpft werden kann, was mit anderen, insbesondere mechanischen stufenlosen Getrieben aufgrund relativ eng begrenztem Übersetzungsbereich nicht möglich ist.

Durch die Anordnung der Bereichskupplungen 18 und 19 zwischen der zweiten Hydrostateinheit B und jeweils zwei Wellen des Summierungsplanetengetriebes 4 treten relativ niedrige Drehmomente an den Kupplungen auf, so daß die Kupplungen entsprechend klein und kostengünstig ausgebildet werden können. Außerdem ist es technisch günstig ausführbar, wenn die Kupplungen mit einem mit der zweiten Hydrostateinheit B verbundenen gemeinsamen Kupplungsglied in Verbindung stehen.

Das Summierungsplanetengetriebe 4 ist als vierwelliges Planetentgetriebe ausgebildet, wobei die erste Welle, Steg 6 mit der Antriebswelle verbunden ist und die mechanische Leistung überträgt, die zweite Welle, Hohlrad 7 über die zweite Bereichskupplung 18 mit der zweiten Hydrostateinheit B verbindbar ist und im zweiten Bereich die hydraulische Leistung überträgt, die dritte Welle die aufsummierte hydraulische und mechanische Leistung über den Steg 20 und das Hohlrad 9 auf die Abtriebswelle überträgt und die vierte Welle über die Kupplung 19 mit der zweiten Hydrostateinheit B im dritten Bereich verbunden ist und die hydraulische Leistung über das Sonnenrad 11 überträgt (Fig. 1).

Das Summierungsplanetengetriebe 24 (Fig. 2) istals dreiwelliges Planetengetriebe ausgebildet, wodurch mit der Kombination mit dem zweiten Planetengetriebe 5 ein erster und ein zweiter Fahrbereich geschaffen wird. Im ersten Fahrbereich und im Rückwärtsbereich wird bei geschlossener Bremse 17 die Leistung rein hydrostatisch über das Sonnenrad 14 und das Hohlrad 15 des zweiten Planetengetriebes 5 auf die Abtriebswelle 3 übertragen. Im zweiten Fahrbereich wird bei geschlossener Kupplung 35 ein Teil der Leistung hydraulisch über das Sonnenrad 37 und die mechanische Leistung über das Hohlrad 39 auf den Steg 38 des Summierungsplanetengetriebes 24 aufsummiert und gemeinsam der Abtriebswelle 3 zugeleitet.

Diese vereinfachte Getriebeausführung (Fig. 2) besitzt zwei Vorwärtsfahrbereiche, wobei der erste und der Rückwärtsbereich rein hydrostatisch und der zweite Bereich hydraulisch-mechanisch arbeiten. Am Ende des zweiten Fahrbereiches, bei maximaler Verstellgröße der hydrostatischen Verstelleinheit A haben alle Glieder des Summierungsplanetengetriebes 24 und des zweiten Planetengetriebes 5 Synchronlauf erreicht.

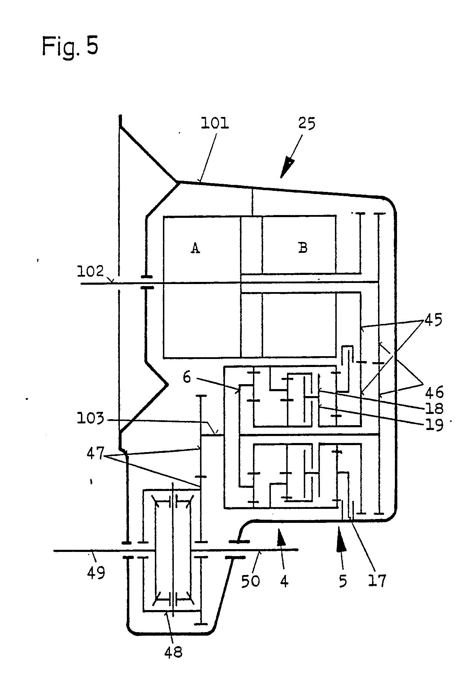

Ist die zweite Hydrostateinheit B als Verstelleinheit ausgebildet, so kann der gesamte Übersetzungsbereich weiter erhöht werden durch Sekundärregelung dieser Hydrostateinheit. Durch diese zusätzliche Sekundärregelung kann der gesamte Übersetzungsbereich bis zu 40 % vergrößert werden, der insbesondere bei Anwendung im PKW sehr vorteilhaft als Overdrivebereich zur Kraftstoffeinsparung genutzt werden kann. Dieses Ausführungsbeispiel ist, wie beschrieben, sehr einfach in seinem Aufbau es bietet einen großen Overdrivebereich, die Abtriebswellendrehzahl entspricht der konventioneller Getriebe, so daß keine zusätzliche Übersetzungsanpassungsstufe am Abtrieb des Getriebes erforderlich ist. Darüber hinaus bietet es gegenüber dem bekannten oben genannten Getriebesystem den Vorteil eines für PKW gewohnten großen Rückwärtsbereiches. Diese Getriebeausführung ist insbesondere für PKWs niedrigerer Leistungsgrößen geeignet, wobei die einzelnen Getriebekomponenten achsparallel versetzt zueinander angeordnet werden können für Querbauweise, wie im Frontantrieb eines PKWs gefordert und in Fig. 5 dargestellt.

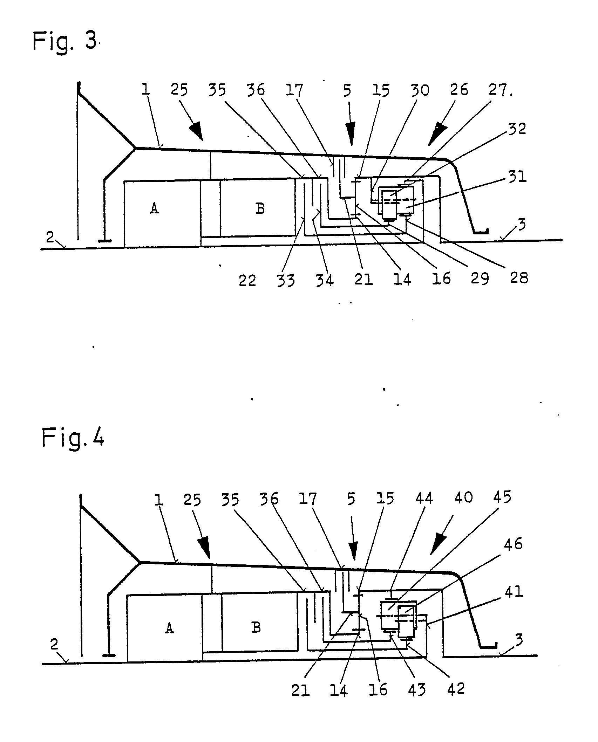

Das Ausführungsbeispiel nach Fig. 3 besitzt ein vierwelliges Summierungsplanetengetriebe 26. Die erste Wwelle des Summierungsplanetengetriebes bildet ein Hohlrad 27, die zweite Welle ein Sonnenrad 28, die dritte Welle der Steg 30 und die vierte Welle ein Sonnenrad 29. Auf dem Steg 30 sind ineinandergreifende Planetenräder 31 und 32 angeordnet. Das zweite Planetengetriebe 5 ist zwischen den Bereichskupplungen 35 und 36 gelagert. Beide Planetentriebeinheiten, Summierungsplanetengetriebe 26 und Planetengetriebe 5 können sehr vorteilhaft im Sinne der Modulbauweise zu einer Montageeirheit zusammengefaßt werden. Ebenso ist es möglich, auch beide Bereichskupplungen 36 und 35 sowie Glieder der ersten Bereichskupplung bzw. Bremse 17 zu einem gemeinsamen Montagepaket zusammenzuschließen.

Das Ausführungsbeispiel nach Fig. 4 ist ähnlich der Ausführung nach Fig. 3, wobei jedoch die erste Welle des Summierungsplanetengetriebes 40 ein Steg 41 darstellt, auf den ineinandergreifende Planetenräder 46 und 45 angeordnet sind und die zweite Welle des Summierungsplanetengetriebes ein Sonnenrad 42 bildet, das in die Planetenräder 46 greift, die dritte mit der Abtriebswelle verbundene Welle ist mit einem Hohlrad 44 verbunden und die vierte Welle des Summierungsplanetengetriebes steht mit einem Sonnenrad 43 in Verbindung. Die Ausführungsbeispiele nach Fig. 3 und 4 besitzen jeweils drei Vorwärtsfahrbereiche und einen Rückwärtsfahrbereich und sind in der Wirkungsweise identisch mit der Ausführung nach Fig. 1.

In dem Ausführungsbeispiel nach Fig. 5 sind die Verzweigungsgetriebekomponenten Summierungsplanetengetriebe 4, Kupplungen 18, 19, zweiter Planetentrieb 5 und die erste Bereichskupplung bzw. Bremse 17 - axial versetzt zur Antriebswelle und dem Hydrostatpaket 25 angeordnet. Die Abtriebswelle 103 ist über eine Stirnradstufe 47 mit einem Achsdifferential 48 verbunden. Diese Bauweise ist insbesondere für frontgetriebene Fahrzeuge, insbesondere PKWs von Vorteil. Das Achsdifferential 48 kann auch quer zur Antriebswelle 102 angeordnet werden, wobei der Antriebsmotor in Längsrichtung des Fahrzeuges sitzt. In diesem Fall wird die Verbindung zwischen Abtriebswelle 103 und dem Achsdifferential 48 über eine nicht dargestellte Kegelradstufe hergestellt. Die beiden Wellen 49 und 50 stehen mit den Triebrädern des Fahrzeugs in direkter Verbindung.

Gegenüber bekannten mechanischen stufenlosen Getriebesystemen bietet dieses stufenlose Verzweigungsgetriebesystem den großen Vorteil, daß die Komponenten, sowohl für Längsbauweise als für Querbauweise, d. h. für Front- wie Heckantrieb gleichermaßen gut geeignet sind. Das Getriebesystem bietet somit den Vorteil hoher Flexibilität hinsichtlich den verschiedensten fahrzeugspezifischen Bedingungen, sowohl in Bezug auf die Bauform als auch in Bezug auf Leistungsgröße und Wandlungsbereich bei weitgehend gleichbleibender Größe des Hydrostatgetriebes 25. Bei Anwendung des Hydrostatgetriebes im PKW besteht das Hauptproblem in der Drehzahlfestigkeit der Hydrostateinheiten A und B. Die hohen Drehzahlen der PKW-Motoren können nur mit kleinen Hydrostateinheiten und entsprechend niedrigen spezifischen Belastungswerten beherrscht werden. Dieses Getriebesystem bietet den Vorteil, daß die spezifische Belastung der Hydrostatik gegenüber den bekannten Systemen wesentlich gesenkt wird und dadurch auch für höhere Leistungsklassen geeignet ist. Dies liegt darin begründet, daß der hydrostatische Leistungsanteil auf Grund der drei Schaltbereiche sehr niedrig ist und die gesamte Leistungskapazität des Getriebes gegenüber dem reinen Hydrostatgetriebe um ca. das 8-fache vergrößert werden kann. Entsprechend dem niedrigen hydrostatischen Leistungsanteil wird der Getriebewirkungsgrad verbessert. Das Getriebesystem erlaubt gegenüber anderen bekannten Getriebesystemen eine Hintereinanderanordnung beider Hydrostateinheiten A und B, wodurch eine kurze und direkte hydraulische Verbindung zwischen den beiden Einheiten gegeben ist und somit die Strömungsverluste auf ein Mindestmaß gesenkt werden. Auch im Hinblick auf die Geräuschentwicklung durch die Hydrostataggregate hat diese Bauweise den großen Vorteil, daß beide Hydrostateinheiten A und B in einem eigenen Gehäuse untergebracht werden können, Innere geräuschbildende Schwingungen somit auf ein Mindestmaß gesenkt und das gesamte Hydrostatpaket zusätzlich schwingungs- und geräuschgedämpft im Hauptgehäuse 1 bzw. 101 gelagert werden kann.

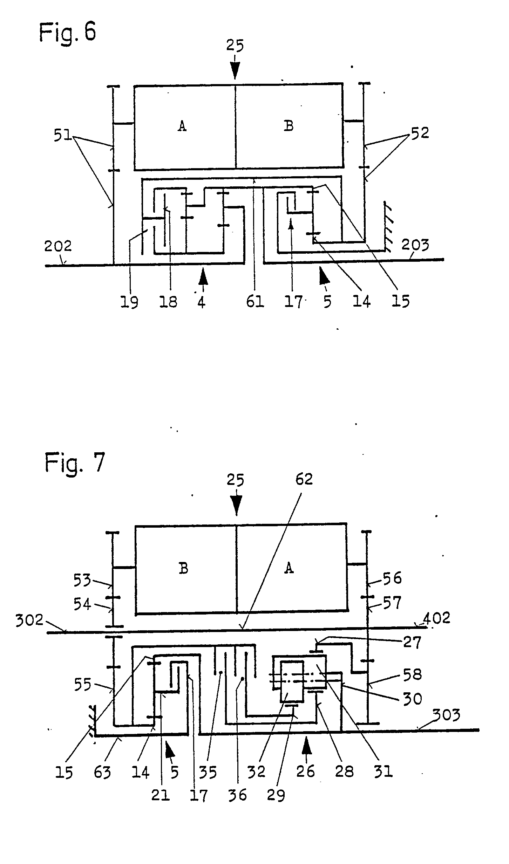

Das Ausführungsbeispiel nach Fig. 6 ist insbesondere für Schwerkraftfahrzeuge, wie Busse und Nutzkraftfahrzeuge geeignet, wobei das Hydrostatgetriebe 25 parallel achsversetzt zur Antriebswelle und den Verzweigungsgetriebekomponenten — Kupplungen 18, 19, Summierungsplanetengetriebe 4, zweites Planetengetriebe 5 und der ersten Bereichskupplung bzw. Bremse 17 — angeordnet ist. Die erste Hydrostateinheit A ist hierbei über eine Stirnradstufe 51 mit der Antriebswelle 202 verbunden. Die zweite Hydrostateinheit B steht über die Stirnradstufe 52 mit dem Sonnenrad 14 der zweiten Hydrostateinheit 5 und über die Hohlwelle 61 mit den Kupplungen 18 und 19 in Verbindung. Bei dieser Ausführungsform ist das Summierungsplanetengetriebe 4 und die beiden Bereichskupplungen 18 und 19 auf der Antriebswelle 202 gelagert und das zweite Planetengetriebe 5, sowie die erste Bereichskupplung bzw. Bremse 17 auf der Abtriebswelle 203.

Im Ausführungsbeispiel nach Fig. 7 sind die Verzweigungsgetriebekomponenten - Summierungsplanetengetriebe 26, Kupplungen 36, 35, Planetengetriebe 5 und die erste Bereichskupplung 17, sowie das Hydrostatpaket 25 - parallel versetzt zur Antriebswelle 62 angeordnet. Diese Ausführungsform bietet zwei gegenüberliegende Antriebsanschlüsse 302 und 402. Die erste Hydrostateinheit A, sowie die erste Welle des Summierungsplanetengetriebes 26, Hohlrad 27 werden über die Stirnradstufe 56, 57 und 58 miteinander verbunden. Die zweite Hydrostateinheit B steht über die Stirnradstufen 53, 54 und 55 mit den Bereichskupplungen 35 und 36, sowie dem Sonnenrad 14 des zweiten Planetengetriebes 5 in Verbindung. Bei dieser Ausführungsform sind das Summierungsplanetengetriebe 26 und die Kupplungen 35, 36 auf der Abtriebswelle 303 angeordnet.

Anstelle der Bremse 17 zum Schalten des ersten Fahrbereiches kann eine nicht dargestellte Kupplung zwischen einem Hohlrad 15 und der Abtriebswelle angeordnet werden. Der Steg 21 ist bei dieser Ausführungsform mit dem Getriebegehäuse in fester Verbindung.

Nachfolgend wird die Funktion des Getriebes beschrieben.

Im ersten Fahrbereich ist die Bereichskupplung bzw. Bremse 17 geschlossen. Am Anfahrpunkt ist die erste Hydrostateinheit A auf Fördervolumen Null eingeregelt, die zweite Hydrostateinheit B beginnt sich bei Verstellung der ersten Hydrostateinheit A entsprechend der Verstellgröße zu drehen, wobei die Drehbewegung über das zweite Planetengetriebe 5 auf die Abtriebswelle übertragen wird. Die Drehrichtung der zweiten Hydrostateinheit B innerhalb dem ersten Fahrbereich ist gegenüber der Antriebswelle 2 gegensinnig. Ist die Hydrostateinheit A auf volles Fördervolumen ausgeregelt, hat das Hohlrad 7 des Summierungsplanetengetriebes 4 Gleichlauf mit der zweiten Hydrostateinheit B und dem damit verbundenen Kupplungsglied 60 erreicht. Nun erfolgt die Schaltung in den zweiten Bereich durch Schließen der Kupplung 18 und Öffnen der ersten Bereichskupplung bzw. Bremse 17. Der Hydrostat wird jetzt wieder zurückgeregelt auf Null und darüber hinaus bis zu seiner maximalen Endverstellung, wo er am Ende des zweiten Schaltbereiches Synchronlauf mit der Antriebswelle erreicht hat. Alle Glieder des Summierungsplanetengetriebes, der Abtriebswelle, sowie der Hydrostateinheiten A und B und des zweiten Planetengetriebes 5 laufen in diesem Betriebszustand Block um. Nach Schliessen der dritten Bereichskupplung 19 wird nun die zweite Bereichskupplung 18 geöffnet und das Hydrostatgetriebe erneut zuruckgeregelt bis am Ende des dritten Schaltbereiches die maximale negative Endverstellung des Hydrostatgetriebes erreicht ist.

Der Rückwärtsbereich ist mit dem ersten Vorwärtsfahrbereich identisch, wobei bei geschlossener Kupplung bzw. Bremse 17 der Hydrostat von Null in entgegengesetzte Richtung ausgeregelt wird. Die Leistung wird über das zweite Planetengetriebe 5 auf das Hohlrad 15 unter entgegengesetzter Drehrichtung auf die Abtriebswelle 3 übertragen.

Der Funktionsablauf bei allen anderen Ausführungsbeispielen ist mit der beschriebenen Ausführung nach Fig. 1 identisch. Bei Ausführungsbeispiel nach Fig. 2 entfällt lediglich der dritte Bereich.

Durch die mit diesem Verzweigungsgetriebesystem erreichbare Senkung der spezifischen Belastung der Hydrostatik und Steigerung der Leistungskapazität, in Verbindung mit der günstigen Bauweise, wird gegenüber bekannten Systemen dieser Art u.a. eine wesentliche Verbesserung in Bezug auf Leistungsgewicht und -volumen erzielt.

Bezugszeichen
1 Gehäuse
2 Antriebswelle
3 Abtriebswelle
4 Summierungsplanetengetriebe
5 Planetengetriebe
6 Steg
7 Hohlrad
8 Welle
9 Hohlrad
10 Sonnenrad
11 Sonnenrad
12 Planetenrad
13 Planetenrad
14 Sonnenrad
15 Hohlrad
16 Planetenrad
17 Bremse
18 Kupplung
19 Kupplung
20 Steg
21 Steg
22 Welle
23 Bereichskupplungen
24 Summierungsplanetengetriebe
25 Hydrostat
26 Summierungsplanetengetriebe
27 Hohlrad
28 Sonnenrad
29 Sonnenrad
30 Steg
31 Planetenrad

32 Planetenrad
33 Kupplungsglied
34 Kupplungsglied
35 Kupplung
36 Kupplung
37 Sonnenrad
38 Steg
39 Hohlrad
40 Summierungsplanetengetriebe
41 Steg
42 Sonnenrad
43 Sonnenrad
44 Hohlrad
45 Stirnradstufe
46 Stirnradstufe
47 Stirnradstufe
48 Achsdifferential
49 Welle
50 Welle
51 Stirnradstufe
52 Stirnradstufe
53 Stirnrad
54 Stirnrad
55 Stirnrad
56 Stirnrad
57 Stirnrad
58 Stirnrad
59 Kupplung
60 Kupplungsglied
61 Hohlwelle
62 Welle
63 Welle

Bezugszeichen
101 Gehäuse
102 Antriebswelle
103 Abtriebswelle
202 Antriebswelle
203 Abtriebswelle
302 Antriebswelle
303 Abtriebswelle
A Hydrostateinheit
B Hydrostateinheit

**Patentansprüche**

1. Stufenloses hydrostatisch-mechanisches Verzweigungsgetriebe für Kraftfahrzeuge mit einem ersten hydrostatischen Schaltbereich und mindestens einem hydrostatisch-mechanischen Schaltbereich, bei dem im zweiten und weiteren Schaltbereich die eingangsseitig in einen hydraulischen und einen mechanischen Leistungszweig aufgeteilte Leistung in einem Summierungsplanetentriebe (4; 24; 26; 40) derart aufsummiert werden, daß die Eingangswelle (2) ständig mit einer ersten variable Hydrostateinheit (A) und einer ersten Welle (6; 39; 27; 41) des Summierungsplanetengetriebes (4; 24; 26; 40) verbunden ist, und eine zweite Hydrostateinheit (B) über ein zweites Planetengetriebe (5) innerhalb des ersten hydrostatischen Schaltbereichs ständig mit der Abtriebswelle (3; 103; 203) in Triebverbindung steht, und innerhalb dem hydrostatisch-mechanischen Betrieb mit dem Summierungsplanetengetriebe in Wirkverbindung steht, dadurch gekennzeichnet, daß die zweite Hydrostateinheit (B) im hydrostatisch-mechanischen Fahrbetrieb bei Ausführung mit nur zwei Vorwärtsfahrbereichen mit einer Welle (37) des Summierungsplanetengetriebes (24) verbindbar ist (Kupplung 35) oder bei Ausführung mit mehr als zwei Vorwärtsfahrbereichen abwechselnd mit einer von zwei Wellen (7, 8; 28, 29; 42, 43) des Summierungsplanetengetriebes (4; 26; 40) verbindbar ist (Kupplung 18, 19; 35, 36).

2. Verzweigungsgetriebe nach Anspruch 1, dadurch gekennzeichnet, daß das Summierungsplanetengetriebe (24) als dreiwelliges Planetengetriebe ausgebildet ist (Fig. 2).

3. Verzweigungsgetriebe nach Anspruch 1, dadurch gekennzeichnet, daß das Summierungsplanetengetriebe (4; 26; 40) als vierwelliges Planetengetriebe ausgebildet ist (Fig. 1, 3, 4, 5, 6, 7).

4. Verzweigungsgetriebe nach einem der Ansprüche 1 oder 3, dadurch gekennzeichnet, daß die vierte Welle (Sonnenräder 10, 11; Sonnenrad 29; 43) mit der zweiten Hydrostateinheit (B) über eine Kupplung (19; 36) verbindbar ist.

5. Verzweigungsgetriebe nach einem der Ansprüche 1, 3 und 4, dadurch gekennzeichnet, daß das Summierungsplanetengetriebe (4) aus zwei Planetengetriebestufen besteht, wobei die erste Welle des Summierungsplanetengetriebes den Steg (6) der ersten Planetengetriebestufe bildet, die zweite Welle des Summierungsplanetengetriebes das Hohlrad (7) der zweiten Planetengetriebestufe bildet, die mit der Abtriebswelle (3) verbundene dritte Welle des Summierungsplanetengetriebes mit dem Hohlrad (9) der ersten Planetengetriebestufe sowie mit dem Steg (20) der zweiten Planetengetriebestufe verbunden ist, und die vierte Welle (8) des Summierungsplanetengetriebes mit dem Sonnenrad (10) der zweiten Planetengetriebestufe verbunden ist (Fig. 1).

6. Verzweigungsgetriebe nach einem der Ansprüche 1, 3 und 4, dadurch gekennzeichnet, daß das vierwellige Summierungsplanetengetriebe (26) aus ineinandergreifenden ersten Planetenrädern (31) und zweiten Planetenrädern (32) besteht, und die erste Welle des Summierungsplanetengetriebes ein Hohlrad (27) bildet, das in erste Planetenräder (31) eingreift, die zweite Welle des Summierungsplanetengetriebes mit einem in die ersten Planetenräder (31) eingreifenden Sonnenrad (28) verbunden ist, die mit der Abtriebswelle (3) verbundene dritte Welle des Summierungsplanetengetriebes (26) den Steg (30) aller Planetenräder (31, 32) bildet, und die vierte Welle des Summierungsplanetengetriebes mit einem Sonnenrad (29) verbunden ist, das mit den zweiten Planetenrädern (32) kämmt (Fig. 3).

7. Verzweigungsgetriebe nach Anspruch 1, 3 und 4 dadurch gekennzeichnet, daß das vierwellige Summierungsplanetengetriebe (40) aus ineinandergreifende erste Planetenräder (46) und zweite Planetenräder (45) besteht, wobei die erste Welle des Summierungsplanetengetriebes (40) der Steg für alle Planetenräder (46 und 45) darstellt, die zweite Welle ein Sonnenrad (42), das in die ersten Planetenräder (46) eingreift darstellt, die mit der Abtriebswelle (3) verbundenen dritte Welle des Summierungsplanetengetriebes ein Hohlrad (44) ist und die vierte Welle des Summierungsplanetengetriebes ein mit den zweiten Planetenrädern (45) eingreifendes Sonnenrad (43) bildet (Fig. 4).

8. Verzweigungsgetriebe nach Anspruch 1 bis 7 dadurch gekennzeichnet, daß das Hydrostatgetriebe (25) die Bereichskupplungen (17, 18, 19; 17, 35, 36), das Summierungsplanetengetriebe (4; 24; 26; 40) und das zweite Planetengetriebe (5) koaxial zueinander angeordnet sind (Fig. 1, 2, 3 und 4).

9. Verzweigungsgetriebe nach Anspruch 1 bis 4 dadurch gekennzeichnet, daß das Hydrostatgetriebe (25) koaxial zur Antriebswelle (102) angeordnet ist und das Summierungsplanetengetriebe (4) die Bereichskupplungen (17, 18, 19), und das zweite Planetengetriebe (5) parallel versetzt zur Antriebswelle (102) angeordnet sind und die Abtriebswelle (103) über eine Übersetzungsstufe (Stirnradstufe 47 bzw, Kegelradstufe bei querangeordnetem nichtdargestelltem Abtrieb) mit einem Achsdifferential (48) verbunden ist (Fig. 5).

10. Verzweigungsgetriebe nach Anspruch 1 bis 4 dadurch gekennzeichnet, daß die Kupplungen (18 u. 19) und das Summierungsplanetengetriebe (4) auf der Antriebswelle (202) angeordnet sind und das zweite Planetengetriebe (5) sowie die erste Bereichskupplung bzw. Bremse (17) auf der Abtriebswelle (203) angeordnet ist (Fig. 6).

11. Verzweigungsgetriebe nach Anspruch 1 bis 4 und 9 dadurch gekennzeichnet, daß die Baugruppen, Kupplungen (18, 19) Summierungsplanetengetriebe (4) erste Bereichskupplung bzw. Bremse (17) und zweites Planetengetriebe (5) koaxial zur Antriebswelle (202) und das Hydrostatgetriebe (25) parallel versetzt zur Antriebswelle (202) angeordnet ist und die erste Hydrostateinheit (A) über eine Stirnradstufe (51) mit der Antriebswelle (202) und die zweite Hydrostateinheit (B) über eine Stirnradstufe (52) mit dem Sonnenrad (14) des zweiten Planetengetriebes (5) und über eine Hohlwelle (61) mit Kupplungsgliedern der Kupplungen (18 u. 19) verbunden ist (Fig. 6).

12. Verzweigungsgetriebe nach Anspruch 1 bis 4 dadurch gekennzeichnet, daß das Hydrostatgetriebe (25) und die Verzweigungsgetriebekomponenten (Summierungsplanetengetriebe 26, Kupplungen 35, 36, Bremse 17, zweites Planetengetriebe 5) zur Antriebswelle (62) parallel versetzt angeordnet sind und zwei Antriebsanschlüsse (302 u. 402) auf gegenüberliegende Getriebeseiten vorhanden sind (Fig. 7).

13. Verzweigungsgetriebe nach Anspruch 1 bis 7 dadurch gekennzeichnet, daß das Sonnenrad (14) des zweiten Planetengetriebes (5) über eine Kupplung mit der zweiten Hydrostateinheit (B) verbindbar ist und der Steg (21) gehäusefest ständig verbunden ist (nicht dargestellt).

14. Verzweigungsgetriebe nach Anspruch 1 und 2 dadurch gekennzeichnet, daß die zweite Hydrostateinheit (B) als Verstelleinheit ausgebildet ist, deren Verstellvolumen bei vorzugsweise geschlossener Kupplung (35) auf kleineres Volumen verstellbar ist zur weiteren Drehzahlsteigerung der Abtriebswelle (3) (Fig. 2).

15. Verzweigungsgetriebe nach Anspruch 1 bis 14 dadurch gekennzeichnet, daß die Kupplungen (18, 19; 35, 36) für den zweiten und dritten Fahrbereich ein gemeinsames, mit der zweiten Hydrostateinheit (B) verbundenes Kupplungsglied aufweisen.

16. Verzweigungsgetriebe nach Anspruch 1 bis 7 dadurch gekennzeichnet, daß das zweite Planetengetriebe (5) mit der zweiten Hydrostateinheit (B) und der Abtriebswelle (3; 103; 203; 303) über eine Kupplung (nicht dargestellt) zwischen Abtriebswelle (3; 103; 203, 303) und einem Glied (Hohlrad 15) des zweiten Planetengetriebes (5) in Triebverbindung gebracht werden kann.

17. Verzweigungsgetriebe nach Anspruch 1 dadurch gekennzeichnet, daß die Hydrostateinheiten (A und B) in einem Extragehäuse untergebracht sind.

18. Verzweigungsgetriebe nach Anspruch 1 dadurch gekennzeichnet, daß die Baugruppen, Summierungsplanetengetriebe (4; 24; 26; 40) Kupplungen (18, 19; 35, 36) zweites Planetengetriebe (5) und Bremse (17) jeweils zu kompletten Montageeinheiten nach Modulbauweise zusammengefaßt sind.

19. Verzweigungsgetriebe nach Anspruch 1 und 17 dadurch gekennzeichnet, daß die Baugruppen, Summierungsplanetengetriebe (4; 24; 26; 40) Kupplungen (18, 19; 35, 36) zweites Planetengetriebe (5) und Bremse (17) eine gemeinsame Montageeinheit bilden.

20. Verzweigungsgetriebe nach mehreren der Ansprüche 1 bis 19 dadurch gekennzeichnet, daß das Hohlrad (44) des vierwelligen Summierungsplanetengetriebes (40) und das Hohlrad (15) des zweiten Planetengetriebes (5) miteinander verbunden sind und ein gemeinsames Bauteil bilden (Fig. 4).

**Revendications**

1. Boîte de vitesses hydrostique-mécanique à système parallèle et à réglage progressif pour véhicules à moteur, comprenant un premier régime de changement hydrostatique et au moins un régime de changement hydrostatique-mécanique, dans lequel, aux deuxième et des autres régimes de changement, la puissance divisée à l'entrée dans une branche de puissance hydraulique et une branche de puissance mécanique, est intégrée dans un engrénage planétaire intégrant (4; 24; 26; 40) d'une façon que l'arbre d'entrée (2) se trouve en raccord permanent avec une première unité hydrostatique variable (A) et un premier arbre (6; 39; 27; 41) de l'engrénage planétaire intégrant (4; 24; 26; 40) pendant qu'une deuxième unité hydrostatique (B) se trouve en raccord d'entraînement permanent avec l'arbre de sortie (3; 103; 203) par un deuxième engrénage planétaire (5) au dedans dudit premier régime de changement hydrostatique, et en raccord fonctionnel avec ledit engrénage planétaire intégrant au dedans du régime d'opération hydrostatique-mécanique, caractérisée en ce qu'au cas d'une construction à deux régimes de marche avant seulement, en opération de marche hydrostatique-mécanique la deuxième unité hydrostatique (B) se peut raccorder à un arbre (37) dudit engrénage planétaire intégrant (24) (accouplement 35), ou au cas d'une construction à plus de deux régimes de marche avant, elle se peut raccorder en alternation à un de deux arbres (7, 8; 28, 29; 42, 43) de l'engrénage planétaire intégrant (4; 26; 40) (accouplement 18, 19; 35, 36).

2. Boîte de vitesses à système parallèle selon la Revendication 1, caractérisée en ce que l'engrénage planétaire intégrant (24) est configuré sous forme d'un engrénage planétaire à trois arbres (Fig. 2).

3. Boîte de vitesses à système parallèle selon la Revendication 1, caractérisée en ce que l'engrénage planétaire intégrant (4; 26; 40) est configuré sous forme d'un engrénage planétaire à quatre arbres (Fig. 1, 3, 4, 5, 6, 7).

4. Boîte de vitesses à système parallèle selon quelconque des Revendications 1 ou 3, caractérisée en ce que le quatrième arbre (roues solaires 10, II; roue solaire 29; 43) se peut raccorder à la deuxième unité hydrostatique (B) par un accouplement (19; 36).

5. Boîte de vitesses à système parallèle selon quelconque des Revendications 1, 3 et 4, caractérisée en ce que ledit engrénage planétaire intégrant (4) comprend deux étages d'engrénage planétaire, dans lequel le premier arbre de l'engrénage planétaire intégrant constitue la traverse (6) du premier étage d'engrénage planétaire, le deuxième arbre de l'engrénage planétaire intégrant formant la couronne de train planétaire (7) du deuxième étage d'engrénage planétaire, le troisième arbre de l'engrénage planétaire intégrant, qui est relié à l'arbre de sortie (3), étant raccordée à la couronne de train planétaire (9) du premier étage d'engrénage planétaire ainsi qu'à la traverse (20) du deuxième étage d'engrénage planétaire, pendant que le quatrième arbre (8) de l'engrénage planétaire intégrant est raccordé à la roue solaire (10) du deuxième étage d'engrénage planétaire (Fig. 1).

6. Boîte de vitesses à système parallèle selon quelconque des Revendications 1, 3 et 4, caractérisée en ce que l'engrénage planétaire intégrant à quatre arbres (26) comprend des premier pignons satellites (31) s'engrenant dans des deuxièmes pignons satellites (32), et en ce que le premier arbre de l'engrénage planétaire intégrant constitue une couronne de train planétaire (27) qui se trouve en engrènement dans des premiers pignons satellites (31), que le deuxième arbre de l'engrénage planétaire intégrant est raccordé à une roue solaire (28) s'engrenant dans les premiers pignons satellites (31), que le troisième arbre de l'engrénage planétaire intégrant (26), qui est accouplé à l'arbre de sortie (3), constitue la traverse (30) de tous les pignons satellites (31, 32), et en ce que le quatrième arbre de l'engrénage planétaire intégrant est raccordé à une roue solaire (29) en engrènement avec les deuxièmes pignons satellites (32) (Fig. 3).

7. Boîte de vitesses à système parallèle selon les Revendications 1, 3 et 4, caractérisée en ce que l'engrénage planétaire intégrant (40) comprend des premiers pignons satellites (46) s'engrenants l'un dans l'autre, le premier arbre de l'engrénage planétaire intégrant (40) constituant la traverse pour tous les pignons satellites (46 et 45), le deuxième arbre constituant une roue solaire (42) en engrènement dans les premiers pignons satellites (46), le troisième arbre de l'engrénage planétaire intégrant, qui est relié à l'arbre de sortie (3), étant pourvu sous forme d'une couronne de train planétaire (44) et le quatrième arbre de l'engrénage planétaire intégrant formant une roue solaire (43) s'engrenante dans les deuxièmes pignons satellites (45) (Fig. 4).

8. Boîte de vitesses à système parallèle selon es Revendications 1 à 7, caractérisée en ce que l'engrénage hydrostatique (25), les accouplements en régime (17, 18, 19; 17, 35, 36), l'engrénage planétaire intégrant (4; 24; 26; 40) et le deuxième engrénage planétaire (5) sont disposés en relation coaxiale l'un relativement à l'autre (Fig. 1, 2, 3 et 4).

9. Boîte de vitesses à système parallèle selon les Revendications 1 à 4, caractérisée en ce que l'engrénage hydrostatique (25) est disposé coaxialement relativement à l'arbre d'entrée (102) et en ce que l'engrénage planétaire intégrant (4), les accouplement en régime (17, 18, 19) et le deuxième engrénage planétaire (5) sont dlsposés en désaxage parallèle à l'arbre d'entrée (102) pendant qu' (au cas d'une sortie en travers non-illustrée) l'arbre de sortie (103) est raccordé par un étage de multiplication (étage d'engrénage droit 47 ou à roues coniques) à un différentiel de l'essieu (47) (Fig. 5).

10. Boîte de vitesses à système parallèle selon les Revendications 1 à 4, caractérisée en ce que les accouplements (18 et 19) et l'engrénage planétaire intégrant (4) sont disposés sur l'arbre d'entrée (202) pendant que le deuxième engrénage planétaire (5) ainsi que le premier accouplement en régime ou le frein (17) sont disposés sur l'arbre de sortie (203) (Fig. 6).

11. Boîte de vitesses à système parallèle selon les Revendications 1 à 4 et 9, caractérisée en ce que les groupes composants, les accouplements (18, 19), l'engrénage planétaire intégrant (4), le premier accouplement en régime ou le frein (17), et le deuxième engrénage planétaire (5) se trouvent en arrangement coaxial relatif à l'arbre d'entrée (202) pendant que l'engrénage hydrostatique (25) est disposé en désaxage relatif à l'arbre d'entrée (202) et la première unité hydrostatique (A) est raccordée par un étage d'engrénage droit (51) à l'arbre d'entrée (202) et la deuxième unité hydrostatique (B) est raccordée par un étage d'engrénage droit (52) à la roue solaire (14) du deuxième engrénage planétaire (5) ainsi que par une couronne de train planétaire (16) aux éléments coupleurs des accouplements (18 et 19) (Fig. 6).

12. Boîte de vitesses à système parallèle selon les Revendications 1 à 4, caractérisée en ce que l'engrénage hydrostatique (25) et les groupes composants de la transmission à système parallèle (l'engrénage planétaire intégrant 26, les accouplements 35, 36, le frein 17, le deuxième engrénage planétaire 5) sont disposés en désaxage parallèle à l'arbre d'entrée (62) et en ce que deux raccordements d'entrée (302 et 402) sont pourvus aux côtés opposés de la boîte (Fig. 7).

13. Boîte de vitesses à système parallèle selon les Revendications 1 à 7, caractérisée en ce que la roue solaire (14) du deuxième engrénage planétaire (5) est raccordable à la deuxième unité hydrostatique (B) par un accouplement et en ce que la traverse (21) se trouve en raccord fixe permanent avec le carter (non-illustré).

14. Boîte de vitesses à système parallèle selon les Revendications 1 et 2, caractérisée en ce que la deuxième unité hydrostatique (B) est configurée en tant qu'une unité de réglage dont le volume de réglage, de préférence à accouplement (35) fermé, se peut régler à un volume réduit pour produire une autre augmentation de la vitesse de l'arbre de sortie (3) (Fig. 2).

15. Boîte de vitesses à système parallèle selon les Revendications 1 à 14, caractérisée en ce que les accouplements (18, 19; 35, 36) pour le deuxième et le troisième régime de marche présentent un élément coupleur commun raccordé à la deuxième unité hydrostatique (B).

16. Boîte de vitesses à système parallèle selon les Revendications 1 à 7, caractérisée en ce qu'on peut établir un raccord d'entraînement entre le deuxième engrénage planétaire (5) et la deuxième unité hydrostatique (B) ainsi que l'arbre de sortie (3; 103; 203; 303) par un accouplement (non-illustré) entre l'arbre de sortie (3; 103; 203, 303) et un élément (couronne de train planétaire 15) dudit deuxième engrénage planétaire (5).

17. Boîte de vitesses à système parallèle selon la Revendication 1, caractérisée en ce que les unités hydrostatiques (A et B) sont accomodées dans un carter séparé.

18. Boîte de vitesses à système parallèle selon la Revendication 1, caractérisée en ce que les groupes, l'engrénage planétaire intégrant (4; 24; 26; 40), les accouplements (18, 19; 35, 36), le deuxième engrénage planétaire (5) et le frein (17) sont respectivement combinés l'un avec l'autre d'une façon modulaire afin de former des unités de montage complètes.

19. Boîte de vitesses à système parallèle selon les Revendications 1 et 17, caractérisée en ce que les groupes, l'engrénage planétaire intégrant (4; 24; 26; 40), les accouplements (18, 19; 35, 36), le deuxième engrénage planétaire (5) et le frein (17) constituent un groupe de montage combiné.

20. Boîte de vitesses à système parallèle selon plusieurs des Revendications 1 à 19, caractérisée en ce que la couronne de train planétaire (44) de l'engrénage planétaire intégrant (40) à quatre arbres et la couronne de train planétaire (15) du deuxième engrénage planétaire (5) sont raccordées l'une à l'autre en constituant un groupe combiné (Fig. 4).

## Claims

1. Continuously variable hydrostatic-mechanical parallel-type gear-box for motor vehicles with a first hydrostatic shifting range and at least one hydrostatic-mechanical shifting range, wherein in the second and any further shifting range the power, which is divided at the input side into a hydraulic and a mechanical power branch, is compounded in a compounding planetary gear (4; 24; 26; 40) in a way that the input shaft (2) is continuously connected to a first variable hydrostatic unit (A) and to a first shaft (6; 39; 27M 41) of said compounding planetary gear (4; 24; 26; 40), and wherein within the first hydrostatic shifting range a second hydrostatic unit (B) is continuously operatively connected through a second planetary gear (5) to the output shaft (3; 103; 203) while in hydrostatic-mechanical operation it is operatively connected to said compounding planetary gear, characterized in that in hydrostatic-mechanical driving operation with only two forward speed ranges, said second hydrostatic unit (B) may be connected to a shaft (37) of said compounding planetary gear (24) (clutch 35) or with more than two forward speed ranges it may be connected in alternation with either of two shafts (7, 8; 28, 29; 42, 43) of said compounding planetary gear (4; 26; 40) (clutch 18, 19; 35, 36).

2. Parallel-type gear-box according to Claim 1, characterized in that said compounding planetary gear (24) is designed as a threeshaft planetary gear (Fig. 2).

3. Parallel-type gear-box according to Claim 1, characterized in that said compounding planetary gear (4; 26; 40) is designed as a four-shaft planetary gear (Figs. 1, 3, 4, 5, 6, 7).

4. Parallel-type gear-box according to any of Claims 1 or 3, characterized in that the fourth shaft (sun wheels 10, ll; sun wheel 29; 43) may be connected through a clutch (19; 36) to said second hydrostatic unit (B).

5. Parallel-type gear-box according to any of Claims 1, 3 and 4, characterized in that said compounding planetary gear (4) is composed of two planetary gear stages, wherein the first shaft of said compounding planetary gear constitutes the crosspiece (6) of the first planetary gear stage, the second shaft of said compounding planetary gear is formed by the hollow wheel (7) of the second planetary gear stage, the third shaft of said compounding planetary gear, which is connected to said output shaft (3), being connected to the hollow wheel (9) of said first planetary gear stage as well as with the crosspiece (20) of said second planetary gear stage, while the fourth shaft (8) of the compounding planetary gear is connected to the sun wheel (10) of said second planetary gear stage (Fig. 1).

6. Parallel-type gear-box according to any of Claims 1, 3 and 4, characterized in that the four-shaft compounding planetary gear (26) consists of intermeshing first planetary pinions (31) and second planetary pinions (32), and that a hollow wheel (27) constitutes the first shaft of said compounding planetary gear, which meshes with flrst planetary pinions (31), that the second shaft of said compounding planetary gear is connected to a sun wheel (28) intermeshing with said first planetary pinions (31), that the third shaft of said compounding planetary gear (26, which is linked up with the output shaft (3), forms the crosspiece (30) of all planetary pinions (31, 32), and that the fourth shaft of said compounding planetary gear is connected to a sun wheel (29) intermeshing with said second planetary pinions (32) (Fig. 3).

7. Parallel-type gear-box according to Claims 1, 3 and 4, characterized in that said four-shaft compounding planetary gear (40) is composed of intermeshing first planetary pinions (46) and second planetary pinions (45), the first shaft of said compounding planetary gear (40) forming the crosspiece for all planetary pinions (46 and 45), that the second shaft is a sun wheel (42) intermeshing with said first planetary pinions (46), that the third shaft of said compounding planetary gear, which is linked up with the output shaft (39), is a hollow wheel (44), and that the fourth shaft of said compounding planetary gear is a sun wheel (43) intermeshing with said second planetary pinions (45) (Fig. 4).

8. Parallel-type gear-box according to Claims 1 to 7, characterized in that said hydrostatic gear (25), said range clutches (17, 18, 19; 17, 35, 36), said compounding planetary gear (4; 24; 26; 40) and said second planetary gear (5) are disposed in coaxial relationship relative to each other (Figs. 1, 2, 3 and 4).

9. Parallel-type gear-box according to Claims 1 to 4, characterized in that said hydrostatic gear (25) is disposed in coaxial relationship relative to the input shaft (102) and that said compounding planetary gear (4), said range clutches (17, 18, 19), and said second planetary gear (5) are disposed with parallel offset from said input shaft (102), and that said output shaft (103) is connected to an axle differential (48) through a transmission stage (spur gear stage 47 or bevel gear stage with transversely arranged non-illustrated output) (Fig. 5).

10. Parallel-type gear-box according to Claims 1 to 4, characterized in that the clutches (18 and 19) and said compounding planetary gear (4) are disposed on the input shaft (202) and that said second planetary gear (5) as well as said first range clutch or brake (17) are arranged on said output shaft (203) (Flg6).

11. Parallel-type gear-box according to Claims 1 to 4 and 9, characterized in that the components, clutches (18, 19), said compounding planetary gear (4), said first range clutch or brake (17) and said second planetary gear (5) are arranged in coaxial relationship with said input shaft (202) while said hydrostatic gear (25) is arranged at parallel offset from said input shaft (202), and that said first hydrostatic unit (A) is connected through a spur gear stage (51) to said input shaft (202 while said second hydrostatic unit (B) is connected through a spur gear stage (52) to the sun wheel (14) of said second planetary gear (5) and through a hollow shaft (61) to clutch elements of said clutches (18 and 19) (Fig. 6).

12. Parallel-type gear-box according to Claims 1 to 4, characterized in that said hydrostatic gear (25) and said branched-gear components (compounding planetary gear 26, clutches 35, 36, brake 17, second planetary gear 5) are arranged with parallel offset relative to the input shaft (62), and that two driving connections (302 and 402) are provided on opposite gear sides (Fig. 7).

13. Parallel-type gear-box according to Claims 1 to 7, characterized in that said sun wheel (14) of the second planetary gear (5) may be connected through a clutch to said second hydrostatic unit (B), and that said crosspiece (21) is permanently fixed to the housing (not illustrated).

14. Parallel-type gear-box according to Claims 1 and 2, characterized in that said second hydrostatic unit (B) is designed as an adjustment unit whose adjustment volume, with the clutch (35) being preferably closed, may be adjusted to a reduced volume for further increase of the speed of said output shaft (3) (Fig. 2).

15. Parallel-type gear-box according to Claims 1 to 14, characterized in that the clutches (18, 19; 35, 36) for the second and third speed ranges include a common clutch element connected to said second hydrostatic unit (B).

16. Parallel-type gear-box according to Claims 1 to 7, characterized in that an operative connection may be established between said second planetary gear (5) and said second hydrostatic unit (B) as well as said output shaft (3; 103; 203; 303) through a clutch (not illustrated) between the output shaft (3; 103; 203, 303) and an element (hollow wheel 15) of said second planetary gear (5).

17. Parallel-type gear-box according to Claim 1, characterized in that said hydrostatic units (A and B) are accommodated in a separate housing.

18. Parallel-type gear-box according to Claim 1, characterized in that each of the assemblies of the compounding planetary gear (4; 24; 26; 40), clutches (18, 19; 35, 36), second planetary gear (5) and brake (17) is combined to form a complete modular assembly.

19. Parallel-type gear-box according to Claims 1 and 17, characterized in that the assemblies of the compounding planetary gear (4; 24; 26; 40), clutches (18, 19; 35, 36), second planetary gear (5) and brake (17) constitute a combined assembly unit.

20. Parallel-type gear-box according to several ones of Claims 1 to 19, characterized in that said hollow wheel (44) of the four-shaft compounding planetary gear (40) and the hollow wheel (15) of said second planetary gear (5) are interlinked and constitute a combined assembly (Fig. 4).

Fig. 1

Fig. 2

Fig. 3

Fig. 4

Fig. 5

Fig. 6

Fig. 7

4